# EUROPÄISCHE PATENTSCHRIFT

(11) **EP 4 170 898 B1**
(45) Veröffentlichungstag und Bekanntmachung des Hinweises auf die Patenterteilung: **22.01.2025**
(21) Anmeldenummer: 22200849.2
(22) Anmeldetag: 11.10.2022
(51) Int. Cl.: H02P 27/08, H02M 5/458

(54) **VERFAHREN ZUM BETRIEB EINER ANLAGE**
METHOD FOR OPERATING A SYSTEM
PROCÉDÉ DE FONCTIONNEMENT D'UNE INSTALLATION

(30) Priorität: 19.10.2021 DE 102021211779
(43) Veröffentlichungstag der Anmeldung: 26.04.2023
(73) Patentinhaber: Baumüller Nürnberg GmbH, 90482 Nürnberg (DE)
(72) Erfinder: SCHINDLER, Achim, 85072 Eichstätt (DE)
(74) Vertreter: FDST Patentanwälte

(56) Entgegenhaltungen:
- EP-A1- 3 425 786
- WO-A1-2019/075104
- DE-A1- 102020 106 624
- DE-A1- 102020 200 925
- US-A1- 2005 258 795

## Beschreibung

Die Erfindung betrifft ein Verfahren zur Inbetriebnahme einer Anlage, die zwei Aktoren aufweist. Die Aktoren sind mittels jeweils eines Umrichters mit einem gemeinsamen Gleichspannungskreis elektrisch kontaktiert.

Anlagen, wie Industrieanlagen, weisen üblicherweise mehrere Aktoren auf, mittels derer eine Erstellung und/oder Bearbeitung eines Werkstücks erfolgt. Die Aktoren selbst umfassen üblicherweise zumindest einen Elektromotor, mittels dessen ein Antrieb eines weiteren Bestandteils des jeweiligen Aktors erfolgt. Um einen Verschleiß des Elektromotors zu verringern und einen Wirkungsgrad zu erhöhen, wird als Elektromotor meist ein bürstenloser Elektromotor verwendet. Somit ist zur Bestromung des Elektromotors ein Umrichter erforderlich, der als Wechselrichter wirkt.

Derartige Umrichter umfassen üblicherweise eine Brückenschaltung, die mehrere Brückenzweige aufweist, die zwischen zwei elektrische Potentiale geschaltet sind. Die beiden elektrischen Potentiale sind üblicherweise konstant, sodass zwischen diesen eine elektrische Gleichspannung anliegt. Jeder der Brückenzweige weist jeweils einen Brückenausgang auf, an den jeweils, sofern mittels des Umrichters ein Betrieb eines Elektromotors erfolgt, eine elektrische Phase des Elektromotors angeschlossen ist. Der Umrichter weist somit genauso viele Brückenausgänge und somit Brückenzweige auf, wie der Elektromotor Phasen umfasst. Sofern der Elektromotor drei Phasen aufweist, umfasst der Umrichter folglich drei Brückenzweige und ist üblicherweise mittels einer B6-Schaltung realisiert oder umfasst diese zumindest. Meist weist jeder Brückenzweig zwei elektrisch in Reihe geschaltete Schalter auf, wobei die Reihenschaltung zwischen die beiden elektrische Potentiale geschaltet ist. Zwischen den beiden Schaltern ist ein Abgriff gebildet, der gegen den jeweiligen Brückenausgang geführt ist.

Prinzipbedingt kann bei Betrieb des Umrichters somit an jeden Brückenausgang lediglich eines der beiden elektrischen Potentiale angelegt werden, sodass sich durch die jeweilige Phase ein elektrischer Stromfluss ergibt. Damit der Betrieb des Elektromotors mit einer bestimmten Leistung erfolgen kann ist jedoch ein Variieren des von jeder Phase geführten elektrischen Stroms und somit des an der jeweiligen Phase angelegten elektrischen Potentials erforderlich. Da die Höhe des elektrischen Potentials nicht verändert werden kann, erfolgt dies über das zeitliche Mittel, sodass ein zeitlich moduliertes elektrisches Potential angelegt wird.

Hierfür wird zum Beispiel eine Pulsweitenmodulation herangezogen, bei dem die zeitliche Länge, die eines der Potentiale an den jeweiligen Brückenausgang angelegt ist, abhängig von einem Nutzsignal, nämlich der Leistungsanforderung, ist. Üblicherweise wird hierbei das Nutzsignal mit einem periodischen Trägersignal verglichen. Wenn das Nutzsignal oberhalb des Trägersignals liegt, wird das eine der Potentiale und ansonsten das andere Potential angelegt. Mittels der Pulsweitenmodulation ist ein vergleichsweise genaues Regeln der Elektromotoren ermöglicht. Jedoch tritt bei jeder Änderung des an dem Brückenausgang angelegten elektrischen Potentials aufgrund von herrschenden Kapazitäten, wie Kabelkapazitäten, der Anlage ein elektrischer Umladestrom auf.

Jeder der Umrichter ist üblicherweise mittels eines Gleichspannungskreises gespeist, mittels dessen die beiden elektrischen Potentiale bereitgestellt sind. Hierbei ist beispielsweise jedem der Umrichter ein entsprechende Gleichspannungskreis zugeordnet, der mittels eines jeweiligen Gleichrichters gespeist ist, der zum Beispiel mit einem Versorgungsnetz elektrisch kontaktiert ist. Zur Kostenersparnis ist meist jedoch lediglich ein einziger Gleichspannungskreis vorgesehen, der mittels eines einzigen Gleichrichters aus dem Versorgungsnetz gespeist ist, und mittels dessen sämtliche Umrichter betrieben werden. Infolgedessen sind Herstellungskosten reduziert.

Um einen abgestimmten Betrieb der Aktoren zueinander zu erreichen, werden die diesen zugeordneten Umrichter üblicherweise mit dem gleichen Trägersignal betrieben. Auch ist auf diese Weise eine Komplexität der Anlage verringert. Jedoch treten somit bei den Aktoren, sofern diese beispielsweise auch entsprechend des gleichen Nutzsignals/Leistungsanforderung betrieben werden, zum gleichen Zeitpunkt die elektrischen Umladeströme auf, die sich addieren, sodass eine vergleichsweise hohe Belastung des Gleichspannungskreises oder über den etwaigen Gleichrichter zurück ins Versorgungsnetz erfolgt. Zur Verhinderung hiervon sind meist Drosseln vorgesehen, was einerseits Herstellungskosten erhöht. Andererseits ist auf diese Weise ein Wirkungsgrad der Anlage geschmälert.

In EP 3 425 786 A1 ist Leistungswandlersystem mit einer Leistungsquelle und einer Vielzahl von Spannungsquellenwandlern zum Treiben jeweiliger Lasten bekannt. Die Vielzahl von Spannungswandlern ist über einen gemeinsamen Gleichstromzwischenkreis mit der Leistungsquelle verbunden.

Aus DE 10 2020 106 624 A1 ist ein Ansteuerschaltkreis für einen Elektromotor bekannt, aufweisend einen ersten getakteten Umrichter, welcher drei Ausgangsanschlüsse aufweist und eingerichtet ist, an jedem Ausgangsanschluss ein erstes pulsweitenmoduliertes Spannungssignal bereitzustellen. Ferner ist ein zweiter getakteter Umrichter vorhanden, welcher drei Ausgangsanschlüsse aufweist und eingerichtet ist, an jedem Ausgangsanschluss ein zweites pulsweitenmoduliertes Spannungssignal bereitzustellen.

WO 2019/075104 A1 zeigt einen drehzahlvariablen Antrieb, der so konfiguriert ist, dass er einen Motor mit Strom versorgt. Der Antrieb umfasst eine erste Leistungseinheit, die so konfiguriert ist, dass sie dem Motor eine erste Leistung zuführt, und eine zweite Leistungseinheit, die so konfiguriert ist, dass sie dem Motor eine zweite Leistung zuführt.

Der Erfindung liegt die Aufgabe zugrunde, ein besonders geeignetes Verfahren zur Inbetriebnahme einer Anlage als auch eine Anlage anzugeben, wobei vorteilhafterweise Herstellungskosten reduziert und/oder eine Belastung verringert ist.

Hinsichtlich des Verfahrens zur Inbetriebnahme einer Anlage wird diese Aufgabedurch die Merkmale des Anspruchs 1 und hinsichtlich der Anlage durch die Merkmale des Anspruchs 2 erfindungsgemäß gelöst. Vorteilhafte Weiterbildungen und Ausgestaltungen sind Gegenstand der jeweiligen Unteransprüche.

Das Verfahren dient der Inbetriebnahme einer Anlage, die einen Gleichspannungskreis aufweist. Bei Betrieb liegt dabei an dem Gleichspannungskreis eine elektrische Gleichspannung an, und der Gleichspannungskreis umfasst hierfür zwei zueinander unterschiedliche elektrische Potentiale. Zum Beispiel ist der Gleichspannungskreis mittels als einer Spannungsquelle gespeist, wie einer Batterie. Alternativ hierzu wird beispielsweise der Gleichspannungskreis von einem Versorgungsnetz gespeist, mittels dessen beispielsweise eine Wechselspannung bereitgestellt ist. Dabei ist zweckmäßigerweise zwischen dem Versorgungsnetz und dem Gleichspannungskreis ein Gleichrichter angeordnet, der vorzugsweise als Brückengleichrichter ausgestaltet ist. Beispielsweise ist der Gleichrichter ungesteuert und insbesondere ein Diodengleichrichter. Alternativ hierzu ist der Gleichrichter gesteuert, und somit ist es möglich, die an dem Gleichspannungskreis anliegende elektrische Gleichspannung einzustellen und/oder von diesem in das Versorgungsnetz elektrische Energie zurück zu speisen. Zusammenfassend liegt bei dem Gleichspannungskreis bei Betrieb eine elektrische Gleichspannung an, die insbesondere größer als 10 V ist. Zum Beispiel ist die elektrische Gleichspannung zwischen 200 V und 600 V. Somit ist das Heranzeihen eines Dreiphasenwechselstromnetzes als Versorgungsnetz möglich.

Die Anlage umfasst ferner zwei Aktoren, die jeweils mittels eines Umrichters mit dem Gleichspannungsnetz elektrisch kontaktiert sind. Somit ist jedem der Aktoren jeweils einer der Umrichter zugeordnet, und mittels dessen erfolgte somit die elektrische Kontaktierung des Gleichspannungskreises. Folglich ist ein Betrieb der Aktoren über die Umrichter möglich, wobei die einzelnen Aktoren aus dem Gleichspannungskreis gespeist werden.

Die Umrichter sind beispielsweise Wechselrichter, sodass die einzelnen Aktoren mit einer jeweiligen (elektrischen) Wechselspannung beaufschlagt sind. Aufgrund der beiden Umrichter ist hierbei auch ein unabhängiger Betrieb der beiden Aktoren zueinander möglich. Hierbei ist es mittels der Umrichter ermöglicht, die einzelnen Aktoren entsprechend eines bestimmten Nutzsignals, das einer Leistungsanforderung entspricht oder zumindest zu dieser korrespondiert, zu betreiben, sodass die einzelnen Aktoren mit unterschiedlichen Leistungen betrieben werden können. Insbesondere sind die beiden Aktoren jeweils mittels eines Elektromotors gebildet oder weisen zum Beispiel jeweils einen entsprechenden Elektromotor auf. Das bzw. die Elektromotoren sind vorzugsweise jeweils synchrone oder asynchrone Drehstrommotoren und/oder bürstenlos.

Das jeweilige Nutzsignal ist dabei insbesondere eine bestimmte Drehzahl und/oder Drehmoment, oder eine sonstige mittels des jeweiligen Aktors aufgebrachte Leistung, anhand dessen mittels des jeweiligen Umrichters die an den jeweiligen Aktor angelegte elektrische Spannung eingestellt wird. Aufgrund der angelegten jeweiligen elektrischen Spannung ergibt sich zum Beispiel ein bestimmter elektrischer Stromfluss, sodass die Aktoren entsprechend des jeweiligen Nutzsignals, also der Leistungsanforderung, betrieben werden.

Die Anlage ist beispielsweise ein Bestandteil eines Kraftfahrzeugs, wie eines Nutzkraftwagens oder Personenkraftwagen (Pkw). In einer weiteren Alternative ist das Kraftfahrzeug beispielsweise ein Baustellenfahrzeug oder ein landwirtschaftliches Gerät. Hierbei ist beispielsweise jeder der Aktoren jeweils einem Rad des Kraftfahrzeugs zugeordnet, oder zum Beispiel ist eines der Aktoren am Hauptantrieb des Kraftfahrzeugs und der verbleibende Aktor einem Nebenaggregat des Kraftfahrzeugs zugeordnet.

Besonders bevorzugt jedoch ist die Anlage eine Industrieanlage und somit stationär ausgestaltet. Hierbei wird zum Beispiel bei Betrieb mittels jedes der Aktoren ein Werkstück bearbeitet, bewegt und/oder erstellt. Hierfür wird mittels jedes der Aktoren insbesondere ein maximaler elektrischer Strom von über 1000 A, 2000 A, 3000 A oder 4000 A getragen oder ist zumindest tragbar. Geeigneterweise sind dabei die beiden Aktoren einer Presse zugeordnet, und mittels der Aktoren werden zwei zueinander beweglich geführte Stempel aufeinandergepresst, sodass ein sich dazwischen befindender Gegenstand komprimiert wird.

Zum Beispiel sind die beiden Aktoren zueinander baugleich oder unterschiedlich aufgebaut. Beispielsweise sind die beiden Aktoren zueinander separate Elektromotoren, oder die beiden Aktoren sind dem gleichen Elektromotor zugeordnet, sodass mittels jedes der Aktoren ein Teilmotor gebildet ist, insbesondere ein Teil eines Stators. Folglich wird der Elektromotor, der die beiden Teilmotoren aufweist, mit zwei Umrichtern betrieben. Insbesondere ist der Elektromotor mit vier Wicklungen ausgestaltet.

Die Anlage soll gemäß einem Verfahren betrieben werden, das vorsieht, dass insbesondere zunächst jeweils ein Nutzsignal für die beiden Aktoren bereitgestellt oder empfangen wird. Anhand des jeweiligen Nutzsignals für den jeweiligen Aktor wird anhand eines jeweiligen periodischen Trägersignals ein pulsweitenmoduliertes Signal erstellt. Mit anderen Worten wird das beispielsweise analog ausgestaltete jeweilige Nutzsignale mittels des jeweiligen periodischen Trägersignals in das pulsweitenmodulierte Signal umgesetzt, das insbesondere ein binäres Signal, also ein digitales Signal ist. Hierbei wird für das Umsetzen der beiden Nutzsignale jeweils das gleichen Trägersignal herangezogen, deren Periode somit gleich ist. Folglich ist das Erstellen der beiden verwendeten Trägersignale vereinfacht.

Beispielsweise erfolgt bei dem Umsetzen des jeweiligen Nutzsignals in das pulsweitenmodulierte Signal ein Vergleich des jeweiligen Nutzsignals mit dem jeweiligen Trägersignal. Falls das Nutzsignal größer als das Trägersignal ist, wird als (aktueller) Wert des pulsweitenmodulierten Signals beispielsweise 1 oder ein sonstiger vorbestimmter Wert verwendet. Anderenfalls ist der Wert des pulsweitenmodulierten Signals gleich 0 ("Null") oder ein sonstiger anderer Wert. Zusammenfassend wird somit jedes Nutzsignal in die digitale Domäne übersetzt, und in jedem pulsweitenmodulierten Signalen liegt das jeweilige Nutzsignal vor. Dabei weisen die beiden pulsweitenmodulierten Signale lediglich eine bestimmte Anzahl, wie zwei, an unterschiedliche Werte auf. Insbesondere weist jedes pulsweitenmodulierte Signal mehrere Pulse von jeweils gleicher Höhe auf, wobei jedoch die Länge der Pulse abhängig von dem aktuellen Wert des jeweiligen Nutzsignals ist.

Beispielsweise werden die pulsweitenmodulierten Signale zu Beginn eines Takts (Periode) des jeweils zugeordneten Trägersignals jeweils zunächst auf einen bestimmten Wert gesetzt, insbesondere den Wert 1, und nachfolgend wird, in Abhängigkeit des aktuellen Werts des Nutzsignals, die Länge der Zeitdauer, während derer der Wert beibehalten wird, angepasst.

Zusammenfassend liegen somit nachfolgend zwei pulsweitenmodulierte Signale vor, von denen jedes zu jeweils einem der Nutzsignale korrespondiert, das einem der Aktoren zugeordnet ist. Der dem gleichen Aktor zugeordnete Umrichter wird entsprechend des jeweils zugeordneten pulsweitenmodulierten Signals zum Anlegen einer entsprechenden elektrischen Spannung an den jeweiligen Aktor betrieben. Hierbei wird beispielsweise der Umrichter derart betrieben, dass jedes Mal, wenn das jeweilige pulsweitenmodulierte Signal einen bestimmten Wert aufweist, an den jeweils zugeordneten Aktor die an dem Gleichspannungskreis anliegende elektrische Spannung angelegt wird. Bei dem verbleibenden Wert des pulsweitenmodulierten Signals hingegen wird keine elektrische Spannung an den Aktor angelegt, oder die entgegengesetzte Polung des Gleichspannungskreises. Zusammenfassend wird somit insbesondere an den jeweiligen Aktor eine elektrische Spannung angelegt, die insbesondere dem pulsweitenmodulierten Signal entspricht oder zum Beispiel die gleiche Form aufweist, wobei jedoch die Werte unterschiedlich sind. Dabei ist insbesondere dem logischen Wert 1 des pulsweitenmodulierten Signals die an dem Gleichspannungskreis anliegende elektrische Spannung zugeordnet und dem logischen 0 ("Null") des pulsweitenmodulierten Signals keine elektrische Spannung. Infolgedessen wird jeder der Aktoren entsprechend des jeweiligen Nutzsignals, also der jeweiligen Leistungsanforderung betrieben.

Aufgrund des Anlegens der jeweiligen elektrischen Spannung ergibt sich ein elektrischer Stromfluss von dem Gleichspannungskreis zu dem jeweiligen Aktor.

Bei jedem Unterbrechen des Anlegens der elektrischen Spannung ist es dabei möglich, dass sich aufgrund von Kapazitäten ein Umladestrom ergibt.

Gemäß dem Verfahren, nach dem die Anlage betrieben werden soll, ist vorgesehen, dass die beiden Trägersignale zwar gleich gewählt sind, also insbesondere die gleiche Form aufweisen. Jedoch sind die beiden Trägersignale zueinander um einen vorbestimmten Phasenversatz versetzt gewählt. Mit anderen Worten ist eines der Trägersignal zu dem anderen zeitversetzt, sodass diese sich nicht direkt entsprechen. Dabei ist der Phasenversatz insbesondere geringer als die Periode des Trägersignals, sodass aufgrund des Phasenversatzes kein direktes Abbilden der beiden Trägersignale aufeinander erfolgt.

Aufgrund des Phasenversatzes sind die einzelnen Pulse der beiden pulsweitenmodulierte Signale zueinander versetzt, sodass die etwaigen Umladeströme nicht gleichzeitig auftreten. Infolgedessen addieren sich diese nicht zum gleichen Zeitpunkt, sondern diese klingen bis zum Auftreten des bei dem anderen Aktor auftreten Umladestroms bereits teilweise ab, sodass das Maximum der Summe der sich ergebenden Umladeströme verringert ist. Infolgedessen ist eine Belastung verringert. Hierbei sind keine zusätzlichen Bauteile, wie Drosseln oder dergleichen, erforderlich oder diese können vergleichsweise leistungsschwach ausgestaltet sein, weswegen Herstellungskosten reduziert sind. Auch ist es möglich, eine bereits bestehende Anlage entsprechend des Verfahrens zu betreiben.

Beispielsweise weist die Anlage mehr als die zwei Aktoren auf, wobei jedem der Aktoren jeweils ein entsprechender Umrichter zugeordnet ist. Das Erstellen des jeweiligen pulsweitenmodulierten Signals in Abhängigkeit des jeweiligen Nutzsignals und das Anlegen der entsprechenden elektrischen Spannung erfolgt dabei stets jeweils in gleicher Art und Weise, wobei jeweils das gleiche Trägersignal verwendet wird. Zum Beispiel sind dabei sämtliche Trägersignale zueinander phasenversetzt, weswegen im Mittel lediglich vergleichsweise geringe Umladeströme auftreten.

Besonders bevorzugt jedoch ist der Phasenversatz gleich der Hälfte der Periode des Trägersignals gewählt, unabhängig von der Anzahl der tatsächlich vorhandenen Umrichter und Aktoren. So ist sowohl bei zwei derartigen Umrichtern und Aktoren als auch bei beispielsweise drei, vier, fünf oder mehr Umrichter/Aktoren lediglich ein einziger Phasenversatz vorhanden, und der Hälfte der Umrichter/Aktoren ist der Phasenversatz zugeordnet, und bei den anderen ist kein Phasenversatz vorhanden. Wenn die Anzahl der Umrichter/Aktoren eine ungerade Zahl ist, ist diesem Umrichter/Aktoren entweder der Phasenversatz zugeordnet oder nicht. Aufgrund der Wahl der Hälfte der Periode als Phasenversatz treten die Umladeströme im Wesentlichen jeweils zum gleichen Zeitpunkt auf, weisen jedoch eine unterschiedliche Polung auf und sind somit in die entgegengesetzte Richtung gerichtet. Daher kompensieren sich die entstehenden Umladeströme. Infolgedessen ist eine Belastung in dem Gleichspannungskreis verringert oder überhaupt nicht vorhanden, sodass eine Belastung der dem Gleichspannungskreis speisenden Spannungsquelle, wie der Batterie oder des Gleichrichters, im Wesentlichen nicht vorliegt. Infolgedessen sind etwaige Drosseln oder dergleichen nicht erforderlich, weswegen Herstellungskosten reduziert sind. Zudem ist auf diese Weise ein Gewicht reduziert. Ferner ist ein vergleichsweise einfaches Einstellen des Phasenversatzes möglich.

Beispielsweise sind die beiden Nutzsignale oder sämtliche Nutzsignale zeitlich konstant. Besonders bevorzugt jedoch sind diese zeitlich veränderlich, insbesondere in Abhängigkeit einer Regelung des jeweiligen Aktors. Beispielsweise wird hierbei zu willkürlichen Zeitpunkten eine Änderung des jeweiligen Nutzsignals durchgeführt. Besonders bevorzugt jedoch erfolgt eine gleichzeitige Änderung der Nutzsignale, sodass ein abgestimmter Betrieb der beiden Aktoren ermöglicht ist. Geeigneterweise ist dabei der Phasenversatz gleich der Hälfte der Periode gewählt, und die Änderung des Nutzsignals erfolgt dabei bei einem der Umrichter zum Start der Periode (des jeweiligen Takts) des zugeordneten Trägersignals und bei dem anderen in der Mitte des jeweiligen Takts. Aufgrund der Wahl der Hälfte der Periode ist stets ein sicheres Bestimmen möglich, wann und/oder wenn die Änderung durchgeführt wird, und bei der Änderung treten keine zusätzlichen Artefakte bei dem auf diese Weise erstellten pulsweitenmodulierten Signal auf.

Beispielsweise werden hierbei die beiden Aktoren anhand des gleichen Nutzsignals betrieben, das somit jeweils zu gleichen Zeitpunkten geändert wird. Geeigneterweise wird dabei auch der Phasenversatz gleich der Hälfte der Periode gewählt. Somit kompensieren sich die auftretenden Umladeströme im Wesentlichen vollständig, weswegen eine Belastung weiter verringert ist.

Zweckmäßigerweise weist das Trägersignal eine Frequenz zwischen 1 kHz und 20 kHz und beispielsweise zwischen 4 kHz oder 16 kHz auf. Zum Beispiel wird als Frequenz 4 kHz, 8kHz oder 16 kHz verwendet. Auf diese Weise ist einerseits eine Anzahl an Änderungen der pulsweitenmodulierten Signale und somit auch der angelegten elektrischen Spannung sowie der sich deswegen ergebenden Umladeströme verringert. Andererseits sind die sich aufgrund der Umsetzung des analogen Nutzsignals in das pulsweitenmodulierte Signal entstehenden Ungenauigkeiten vergleichsweise gering. Auch erfolgt auf diese Weise ein vergleichsweise schnelles Umsetzen/Berücksichtigen einer Änderung des Nutzsignals.

Beispielsweise wird als Trägersignal ein Sägezahnsignal herangezogen. Besonders bevorzugt jedoch wird als Trägersignal eine Dreieckswelle herangezogen, sodass jeder Takt bzw. jede Periode eine aufsteigende und eine absteigende Flanke aufweist. Insbesondere ist der Betrag der Neigung der beiden Flanken gleich. Sofern somit der Phasenversatz gleich der Hälfte der Periode gewählt wird, beginnt bei dem einen der Trägersignale die aufsteigende Flanke und bei dem anderen Trägersignal die absteigende Flanke. Auf diese Weise ist ein gleichzeitiges Umsetzen der Änderung der beiden Nutzsignale möglich. Zudem ist es somit möglich, als das eine Trägersignal das invertierte andere Trägersignal zu verwenden. Somit sind Hardwareanforderungen reduziert. Auch erfolgt auf diese Weise ein genaues Einstellen des Phasenversatzes, nämlich genau der Hälfte der Periode.

Das erfindungsgemäße Verfahren dient der Inbetriebnahme der Anlage, die die zwei Aktoren aufweist, die mittels jeweils eines der Umrichter mit dem gemeinsamen Gleichspannungskreis elektrisch kontaktiert sind. Die Anlage soll dabei nach der Inbetriebnahme gemäß dem Verfahren betrieben werden, bei dem in Abhängigkeit eines jeweiligen Nutzsignals für den jeweiligen Aktor anhand eines jeweiligen periodischen Trägersignals ein pulsweitenmoduliertes Signal erstellt wird. Jeder Umrichter wird dabei zum Anlegen einer entsprechenden elektrischen Spannung an den jeweiligen Aktor betrieben. Die beiden Trägersignale sind dabei gleich, jedoch um einen vorbestimmten Phasenversatz zueinander versetzt gewählt.

Das Verfahren zur Inbetriebnahme sieht vor, dass die beiden Trägersignale zunächst zu einem gemeinsamen Zeitpunkt ohne Phasenversatz gestartet werden. Folglich sind die beiden Trägersignale zunächst synchron zueinander. Zum Beispiel wird als gemeinsame Zeitpunkt der Start der Anlage herangezogen oder ein sonstiger vorbestimmter Zeitpunkt. Aufgrund des gemeinsamen Zeitpunkts ist ein gleichzeitiges Erstellen und/oder Synchronisieren der Trägersignale vereinfacht. Auch ist auf diese Weise ein Überprüfen, ob die beiden Trägersignale tatsächlich zueinander synchron sind, ermöglicht. Sofern dies nicht der Fall ist, werden diese zum Beispiel zu einem weiteren gemeinsamen Zeitpunkt erneut gestartet. Erst wenn dies erfolgreich ist, wird das Verfahren zur Inbetriebnahme weitergeführt. Zum Starten der Trägersignale wird hierbei ein Kommunikationssystem, wie ein Feldbus, verwendet, mittels dessen die Umrichter, insbesondere deren Steuereinheiten, mittels derer die jeweiligen pulsweitenmodulierten Signale erstellt werden, signaltechnisch verbunden sind. Mittels des Kommunikationssystems kann hierbei eine Kommunikation der Umrichter untereinander und/oder mit einem übergeordneten Steuergerät erfolgen. Insbesondere ist zur Kommunikation jedem der Umrichter eine bestimmte Adresse zu geordnet.

**In** einem nachfolgenden Arbeitsschritt wird die Frequenz des Trägersignals, das einem der Umrichter zugeordnet ist, für eine Periode verändert, sodass sich zwischen den Trägersignalen der vorbestimmte gestellte Phasenversatz ergibt. Dies erfolgt hierbei in Abhängigkeit der Adresse des jeweiligen Umrichters, die beispielsweise eine IP-Adresse oder eine sonstige Adresse ist. Die jeweilige Adresse ist insbesondere eine Zahl oder zum Beispiel in eine Zahl überführbar. Die Veränderung der Frequenz erfolgt vorzugsweise in Abhängigkeit davon, ob die Adresse gerade oder ungerade ist. Sofern die Adresse nicht vollständig eine Zahl ist, wird die Unterscheidung insbesondere in Abhängigkeit einer Ziffer der Adresse getroffen, insbesondere der jeweils letzten Ziffer.

Zum Beispiel wird die Frequenz des Trägersignals, die dem Umrichter mit einer geraden Ziffer bzw. Zahl zugeordnet ist, nicht verändert, wohingegen die Frequenzen der Trägersignale, die den Umrichter mit einer ungeraden Ziffer bzw. Zahl als Adresse zugeordnet sind, für die Periode geändert wird. Alternativ hierzu erfolgt das Abändern bei den Adressen mit der geraden Ziffer/Zahl.

Zum Beispiel wird die Frequenz für mehrere Perioden abgeändert oder besonders bevorzugt lediglich für genau eine. Nach dem Abändern der Frequenz für die Periode wird die Frequenz des Trägersignals zweckmäßigerweise wieder auf den ursprünglichen Wert gesetzt. Zusammenfassend wird somit in Abhängigkeit der Adresse des jeweiligen Umrichters die Frequenz des zugeordneten Trägersignals für eine Periode verändert und nachfolgend erneut auf den ursprünglichen Wert gesetzt. Aufgrund der Abänderung der Frequenz für die Periode ergibt sich der vorbestimmte Phasenversatz, und die Frequenz wird derart abgeändert, dass sich der vorbestimmte Phasenversatz ergibt. Zum Beispiel wird die Frequenz für mehrere Perioden/Takte abgeändert, wobei das Maß des Abänderns der Frequenz in Verbindung mit der Anzahl der Perioden zur dem vorbestimmten Phasenversatz führt, und diese somit aufeinander angepasst sind.

Da während der Änderung der Frequenz bei beiden Umrichtern das jeweilige Trägersignal zur Verfügung steht, ist bereits ein Erstellen des pulsweitenmodulierten Signals ermöglicht, wobei ein Ausbilden von Artefakten unterbleibt. Folglich ist eine Robustheit erhöht.

Besonders bevorzugt ist hierbei der Phasenversatz gleich der Hälfte der Periode gewählt, und zum Abändern deren Frequenz wird diese zweckmäßigerweise auf den doppelten Wert gesetzt, weswegen ein Aufwand verringert ist. Geeigneterweise weisen die Trägersignale als Frequenz 8 kHz auf, und bei einem der Trägersignale wird in Abhängigkeit der Adresse für eine Perioden die Frequenz auf 16 kHz gesetzt.

Die Anlage weist zwei mittels eines jeweiligen Umrichters mit einem gemeinsamen Gleichspannungskreis elektrisch kontaktierte Aktoren auf. Zum Beispiel umfasst die Anlage auch eine (Gleich-)Spannungsquelle, mittels derer der Gleichspannungskreis gespeist ist. Die Gleichspannungsquelle ist beispielsweise eine Batterie oder zum Beispiel ein Gleichrichter, der im Montagezustand mit einem Versorgungsnetz elektrisch kontaktiert ist.

Die Anlage ist gemäß einem Verfahren betrieben, bei dem in Abhängigkeit eines jeweiligen Nutzsignals für den jeweiligen Aktor anhand eines jeweiligen periodischen Trägersignals ein pulsweitenmoduliertes Signal erstellt und der jeweilige Umrichter zum Anlegen einer entsprechenden elektrischen Spannung an den jeweiligen Aktor betrieben wird. Die beiden Trägersignale werden gleich, jedoch um einen vorbestimmten Phasenversatz zueinander versetzt gewählt. Die Anlage weist insbesondere ein Steuergerät auf, das vorgesehen und eingerichtet ist, das Verfahren durchzuführen. Das Steuergerät umfasst beispielsweise einen anwendungsspezifischen Schaltkreis (ASIC) oder besonders bevorzugt einen Computer, der geeigneterweise programmierbar ausgestaltet ist. Insbesondere umfasst das Steuergerät ein Speichermedium, auf dem ein Computerprogrammprodukt, das auch als Computerprogramm bezeichnet ist, gespeichert ist, wobei bei Ausführung dieses Computerprogrammprodukts, also des Programms, der Computer veranlasst wird, das Verfahren durchzuführen.

Besonders bevorzugt sind die beiden Umrichter signaltechnisch miteinander verbunden, vorzugsweise auch mit dem etwaigen Steuergerät. Zum Beispiel wird zur signaltechnischen Verbindung ein Kommunikationssystem, wie zum Beispiel ein Feldbus herangezogen. Zum Beispiel umfasst jeder Umrichter eine Steuereinheit, mittels derer das jeweilige pulsweitenmodulierte Signal erstellt wird, oder mittels derer beispielsweise das Anlegen der elektrischen Spannung in Abhängigkeit des jeweiligen, zum Beispiel mittels des Steuergeräts erstellten, pulsweitenmodulierten Signals erfolgt. Das Steuergerät ist auch geeignet, vorgesehen und eingerichtet, ein Verfahren zur Inbetriebnahme der Anlage durchzuführen, bei dem die beiden Trägersignale zu einem gemeinsamen Zeitpunkt ohne Phasenversatz gestartet werden, wobei in Abhängigkeit einer Adresse des jeweiligen Umrichters die Frequenz des zugeordneten Trägersignals für eine Periode verändert und nachfolgend erneut auf den ursprünglichen Wert gesetzt wird, sodass sich zwischen den Trägersignalen der vorbestimmte Phasenversatz ergibt.

Falls die Anlagen noch einen dritten Aktor und/oder Umrichter aufweist, ist der Phasenversatz beispielsweise gleich dem Drittel einer Periode oder ebenfalls die Hälfte der Periode, sodass zwei der Trägersignale keinen Phasenversatz zueinander jedoch zu dem verbleibende Trägersignal aufweisen. Somit treten bei Betrieb zwar Umladeströme auf, die nicht kompensiert werden. Diese sind jedoch im Vergleich zu einem vollständig synchronen Verlauf der Trägersignale reduziert.

Beispielsweise sind die einzelnen Umrichter einphasig, wobei zum Beispiel die Umrichter ein Bestandteil eines Umrichterkomplexes sind. Insbesondere ist dabei der Umrichterkomplex dreiphasig ausgestaltet, und mittels jedes der Umrichter wird zum Beispiel bei Betrieb eine Phase eines Elektromotors bestromt. Somit wird als jeweiliger Aktor somit eine der Phasen des Elektromotors herangezogen. Zum Beispiel ist dabei der Elektromotor zweiphasig, oder besonders bevorzugt dreiphasig, sodass auch der Umrichterkomplex dreiphasig ausgestaltet ist. Zweckmäßigerweise sind somit drei Umrichter vorhanden, die entsprechend des Verfahrens betrieben werden, wobei zwei der Trägersignale zueinander keinen jedoch zu dem verbleibenden Trägersignal den Phasenversatz aufweisen.

Besonders bevorzugt jedoch sind die Umrichter jeweils dreiphasig ausgestaltet und weisen insbesondere eine sogenannte Brückenschaltung, vorzugsweise eine B6-Schaltung, auf. Hierbei ist jedem der Umrichter vorzugsweise das gleiche Trägersignal und somit auch der gleiche Phasenversatz zugeordnet, sodass den einzelnen Phasen des gleichen Umrichters zueinander kein Phasenversatz zugeordnet ist. Insbesondere wird hierbei als Aktor jeweils ein Elektromotor herangezogen, der insbesondere ebenfalls dreiphasig ist. Zum Beispiel ist in diesem Fall die Anlage eine Presse, und mittels der beiden Elektromotoren erfolgt zweckmäßigerweise das Aufeinanderpressen zweier Stempel.

Beispielsweise umfasst der jeweilige Aktor zusätzlich zu dem Elektromotor noch weitere Bestandteile, die mittels des Umrichters bestromt oder betrieben werden. In einer Alternative sind die beiden Aktoren jeweils Teilmotoren eines gemeinsamen Elektromotors. Der Elektromotor weist dabei insbesondere eine zu der Anzahl an Umrichtern und den Phasen der Umrichter korrespondierende Anzahl an Phasen auf. Sofern die Umrichter dreiphasig ausgestaltet sind, umfasst der Elektromotor somit sechs Phasen, wobei drei davon mittels des einen Umrichters und die anderen mittels des verbleibenden Umrichters betrieben sind. Zum Beispiel sind die Teilmotoren ineinander versetzt und/oder abschnittsweise angeordnet. Vorzugsweise ist mittels der beiden Teilmotoren der Stator gebildet, oder der Stator umfasst zumindest die Teilmotoren. Besonders bevorzugt weist der Elektromotor dabei lediglich einen einzigen Rotor auf, der mittels der beiden Teilmotoren in Rotation versetzt wird. Aufgrund der beiden Umrichter sowie der beiden Aktoren ist eine maximal mittels des Elektromotors aufbringbare Kraft und/oder Drehmoment erhöht, sodass mittels der Anlage auch vergleichsweise hohe Leistung aufgebracht werden kann. Besonders bevorzugt ist dabei der Phasenversatz zwischen den beiden Trägersignalen gleich der Hälfte einer Periode, sodass ein abgestimmter Betrieb der beiden Teilmotoren vereinfacht ist. Zum Beispiel wird für die beiden Aktoren das gleiche Nutzsignal herangezogen.

Auch betrifft die Erfindung ein Computerprogrammprodukt, das eine Anzahl an Befehlen umfasst, die bei der Ausführung des Programms (Computerprogrammprodukts) durch einen Computer diesen veranlassen, das oben genannte Verfahren zum Betrieb der Anlage und/oder zur Inbetriebnahme der Anlage durchzuführen. Der Computer ist zweckmäßigerweise ein Bestandteil eines Steuergeräts oder Elektronik und beispielsweise mittels dieser gebildet. Der Computer umfasst vorzugsweise einen Mikroprozessor oder ist mittels dessen gebildet. Das Computerprogrammprodukt ist beispielsweise eine Datei oder ein Datenträger, der ein ausführbares Programm enthält, das bei einer Installation auf einem Computer das jeweilige Verfahren automatisch ausführt.

Die Erfindung betrifft ferner ein Speichermedium, auf dem das Computerprogrammprodukt gespeichert ist. Ein derartiges Speichermedium ist beispielsweise eine CD-ROM, eine DVD oder eine Blu-Ray Disc. Alternativ hierzu ist das Speichermedium ein USB-Stick oder ein sonstiger Speicher, der zum Beispiel wiederbeschreibbar oder lediglich einmalig beschreibbar ist. Ein derartiger Speicher ist beispielsweise ein Flash Speicher, ein RAM oder ein ROM.

Auch betrifft die Erfindung ein Steuergerät, das vorgesehen und eingerichtet, das entsprechende Verfahren durchzuführen. Das Steuergerät weist beispielsweise einen anwendungsspezifischen Schaltkreis (ASIC) und/oder einen Mikroprozessor auf, mittels dessen das jeweilige Verfahren zumindest teilweise durchgeführt wird. Insbesondere umfasst das Steuergerät ein Computerprogrammprodukt, das auf einem Speicher abgespeichert ist, und das bei der Ausführung des Programms durch einen Computer, wie den Mikroprozessor, diesen veranlasst, das Verfahren durchzuführen.

Die im Zusammenhang mit dem Verfahren erläuterten Weiterbildungen und Vorteile sind sinngemäß auch auf die Anlage / das Computerprogrammprodukt/ das Speichermedium / das Steuergerät sowie untereinander zu übertragen und umgekehrt.

Nachfolgend werden Ausführungsbeispiele der Erfindung anhand einer Zeichnung näher erläutert. Darin zeigen:
- Fig. 1: schematisch eine Anlage aufweist die zwei Aktoren umfasst
- Fig. 2: schematisch ausschnittsweise eine weitere Variante der Anlage,
- Fig. 3: ein Verfahren zur Inbetriebnahme und den Betrieb der Anlage,
- Fig. 4, 5: den zeitlichen Verlauf von Trägersignalen während der Inbetriebnahme, und
- Fig. 6: den zeitlichen Verlauf von Nutzsignalen und pulsweitenmodulierten Signalen während des Betriebs der Anlage

Einander entsprechende Teile sind in allen Figuren mit den gleichen Bezugszeichen versehen.

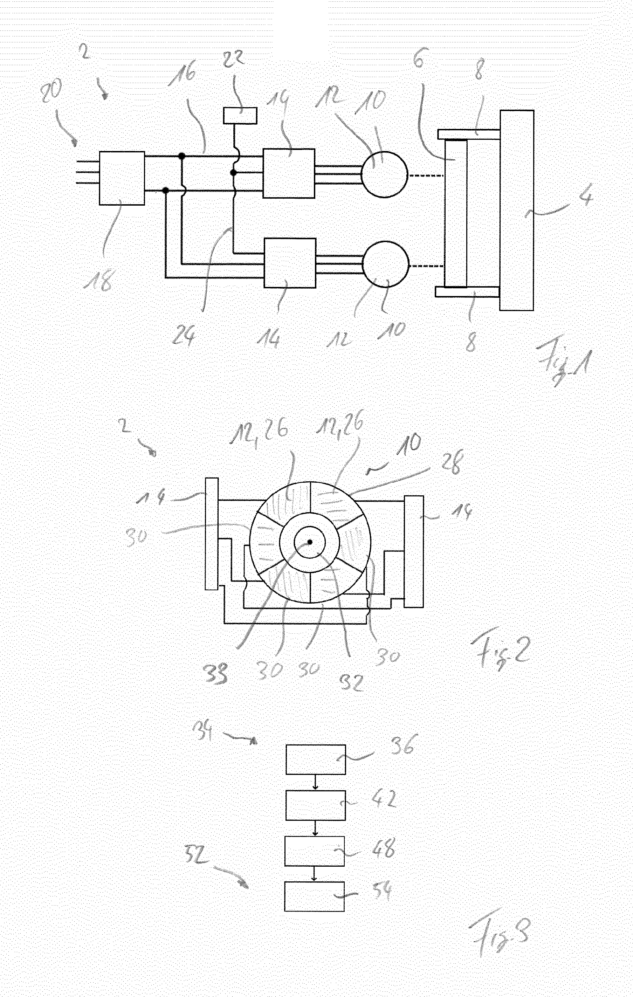

**In** Figur 1 ist schematisch vereinfacht eine Anlage 2 in Form einer elektrischen Presse gezeigt. Die Anlage 2 weist einen feststehenden Stempel 4 sowie einen hierzu beweglich gelagerten beweglichen Stempels 6 auf, der mittels einer Führung 8 geführt ist. Somit ist es möglich, den beweglichen Stempel 6 an den feststehenden Stempel 4 anzunähern oder von diesem zu beabstanden. Der bewegliche Stempel 6 ist mittels zweier Elektromotoren 10 angetrieben, die jeweils einen Aktor 12 der Anlage 2 darstellen. Aufgrund der beiden Elektromotoren 10 ist hierbei eine Kraft, mittels derer der bewegliche Stempel 6 auf den feststehenden Stempel gepresst werden kann, vergrößert.

Die Elektromotoren 10 sind Synchronmotoren und jeweils dreiphasig ausgestaltet. Die Bestromung der Elektromotoren 10 erfolgt mittels jeweils eines zugeordneten Umrichters 14. Die Umrichter 14 sind dreiphasig ausgestaltet, und jeder Umrichter 14 weist eine nicht näher dargestellte Brückenschaltung, nämlich eine B6-Schaltung, auf. Die Umrichter 14 sind mittels eines gemeinsamen Gleichspannungskreises 16 gespeist, an dem bei Betrieb eine elektrische Gleichspannung von 400 V anliegt. Zusammenfassend weist somit die Anlage 2 die zwei Aktoren 12 auf, die mittels jeweils eines der Umrichter 14 mit dem gemeinsamen Gleichspannungskreis 16 elektrisch kontaktiert sind.

Der Gleichspannungskreis 16 wird mittels eines Gleichrichters 18, der als Spannungsquelle dient, gespeist. Der Gleichrichter 18 ist elektrisch mit einem dreiphasigen Versorgungsnetz 20 elektrisch kontaktiert. Die Anlage 2 umfasst ferner ein Steuergerät 22, das ein Mastersteuergerät eines Feldbuses 24 bildet, sodass mittels des Steuergeräts 22 die Kommunikation über den Feldbus 24 koordiniert wird. Die beiden Umrichter 14 sind ebenfalls signaltechnisch mit dem Feldbus 24 signaltechnisch verbunden und weisen hierfür eine geeignete Steuereinheit auf, die als Slavesteuergeräte dienen. Somit ist jedem der Umrichter 14 eine bestimmte Adresse des Feldbuses 24, wie eine IP-Adresse zugewiesen.

**In** Figur 2 ist eine Abwandlung der Anlage 2 ausschnittsweise dargestellt. Hierbei ist lediglich ein einzelner Elektromotor 10 vorhanden, der ebenfalls als Synchronmotor ausgestaltet ist. Der Elektromotor 10 weist jedoch zwei Teilmotoren 26 auf, die die Aktoren 12 bilden. Die Teilmotoren 26 bilden den Stator 28 des Elektromotors 10, wobei jeder der Teilmotoren 26 drei der insgesamt sechs Phasen 30 des Stators bildet. Die Phasen 30 der Teilmotoren 26 sind zueinander abwechselnd umfangsseitig angeordnet, sodass die Teilmotoren 26 ineinander verschränkt sind. Die Phasen 30 jedes der Teilmotoren 26 sind mit jeweils dem gleichen Umrichter 14 elektrisch kontaktiert und können somit mittels dessen bestromt werden.

Mittels des Stators 28 ist ein gemeinsamer Rotor 32 umgeben, der bei Bestromung dem einzelnen Phasen 30 um eine Rotationsachse 33 rotiert wird. Zusammenfassend sind die Aktoren 12 in dieser Variante jeweils Teilmotoren 26 des gemeinsamen Elektromotors 10.

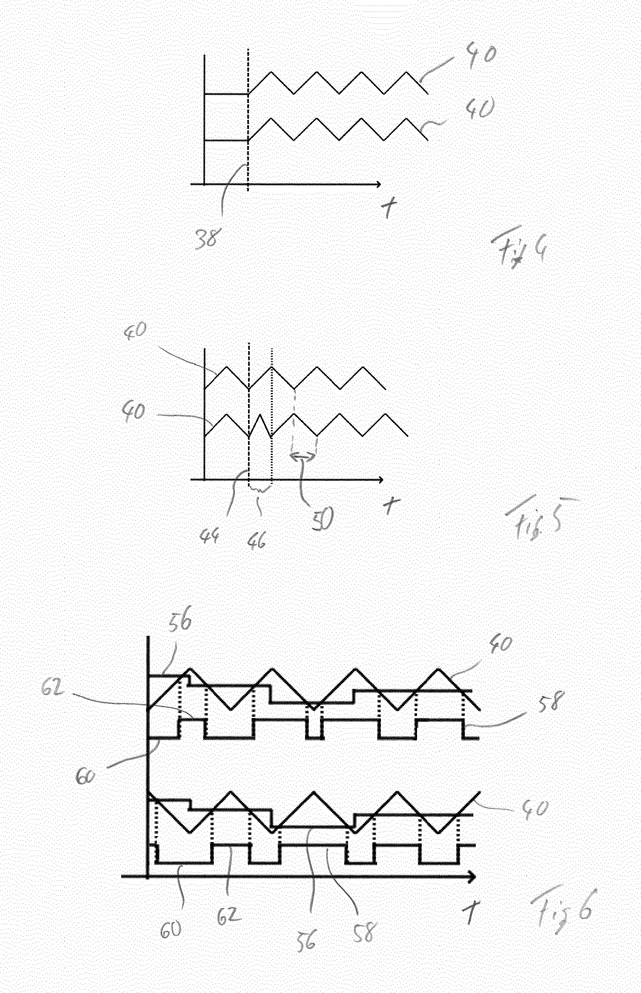

**In** Figur 3 ist ein Verfahren 34 zur Inbetriebnahme der Anlage 2 dargestellt, das zumindest teilweise mittels des Steuergeräts 22 sowie der etwaigen Steuereinheiten der Umrichter 14 durchgeführt wird. **In** einem ersten Arbeitsschritt 36 werden zu einem gemeinsamen Zeitpunkt 38 zwei Trägersignale 40 gestartet, deren zeitliche Verlauf in Figur 4 dargestellt ist. Jedes der periodischen Trägersignale 40 ist jeweils einem der Umrichter 14 zugeordnet und weist eine Frequenz von 8 kHz auf. Jedes Trägersignal 40 wird mittels der jeweiligen Steuereinheit erstellt, nachdem zu dem gemeinsamen Zeitpunkt 38 ein Startsignal, das von dem Steuergerät 22 erstellt und über den Feldbus 24 ausgesandt wurde, empfangen wurde. Als jeweilige Trägersignal 40 wird eine Dreieckswelle herangezogen, die somit mehrere Perioden/Takte aufweist, die jeweils mittels einer ansteigenden und einer absteigenden Flanke gebildet sind. Aufgrund des Starts zu dem gemeinsamen Zeitpunkt 38 sind die beiden Trägersignal 40 zeitlich zueinander synchron und im Wesentlichen nicht unterscheidbar.

**In** einem sich zeitlich anschließenden zweiten Arbeitsschritt 42 wird zu einem weiteren Zeitpunkt 44 die Frequenz eines der Trägersignale 40 für eine einzige Periode 46 verändert und zwar verdoppelt, wie in Figur 5 dargestellt. Somit weist dieses Trägersignal 40 für die Periode 46 als Frequenz 16 kHz. Infolgedessen ist diese Periode 46 bereits beendet, wenn bei dem anderen Trägersignal 40 erst die Hälfte der Periode abgelaufen ist. Mit anderen Worten wird zu dem weiteren Zeitpunkt 44 die Frequenz eines der Trägersignale 40 erhöht. Als weiterer Zeitpunkt 44 wird dabei der Beginn eines der Takte der Trägersignale 40 gewählt, die bis dahin noch jeweils gleichen Zeitpunkt anfangen.

Das Trägersignal 40, das verändert wird, wird in Abhängigkeit der Adresse des Umrichters 14 gewählt. In diesem Beispiel wird willkürlich das Trägersignal 40 verändert, das dem Umrichter 14 mit einer geraden Adresse des Feldbuses 24 zugeordnet ist. Sofern die Anlage 2 mehr derartige Umrichter 14 aufweisen sollte, ist ebenfalls jedem der Umrichter 14 ein entsprechendes Trägersignal 40 zugeordnet. Auch hier wird, unabhängig von der tatsächlichen Anzahl der Umrichter 14, bei jedem der Trägersignale 40, die einem der Umrichter 14 mit einer geraden Adresse zugeordnet sind, zu dem weiteren Zeitpunkt 44 die Frequenz für die Periode 46 verdoppelt.

In einem sich anschließenden dritten Arbeitsschritt 48 wird nach Ablauf der Periode 46 die abgeänderte Frequenz erneut auf den ursprünglichen Wert gesetzt, also auf 8 kHz. Infolgedessen ergibt sich zwischen den beiden Trägersignalen 40 ein bestimmter Phasenversatz 50, der gleich der Hälfte der Periode der unveränderten Trägersignale 40 ist. Mit anderen Worten sind nach Durchführung des dritten Arbeitsschritt 48 erneut die beiden Trägersignale 40 gleich, wobei zwischen diesen jedoch der vorbestimmte Phasenversatz 50 von der Hälfte einer Periode des periodischen Trägersignals 40 ist. Folglich ist eines der Trägersignale 40 das Invertierte des anderen Trägersignal 40.

Nachfolgend ist das Verfahren zur Inbetriebnahme 34 abgeschlossen, und es wird, ebenfalls mittels des Steuergeräts 22 sowie der Steuereinheiten der Umrichter 14, ein Verfahren 52 für den Betrieb der Anlage 2 durchgeführt. Folglich dient das Verfahren 34 der Inbetriebnahme der Anlage 2, die gemäß dem Verfahren 52 betrieben werden soll.

In einem vierten Arbeitsschritt 54 werden zwei Nutzsignale 56 empfangen oder mittels des Steuergeräts 22 erstellt sowie über den Feldbus 24 zu den beiden Umrichtern 14 übermittelt. Die Nutzsignale 56 entsprechen einer Leistungsanforderung, und für die beiden Aktoren 12 wird das gleiche Nutzsignal 56 herangezogen. In Abhängigkeit des Nutzsignals 56 wird bei jedem der Umrichter 14 ein pulsweitenmoduliertes Signal 58 erstellt. Hierfür wird mittels eines Komparators der jeweiligen Steuereinheit das Nutzsignale 56 mit dem zugeordneten Trägersignal 40 verglichen. Wenn das Nutzsignal 56 größer als das Trägersignal 40 ist, wird ein erster Wert 60 für als das pulsweitenmodulierte Signal 58 verwendet. Wenn das Nutzsignals 56 kleiner als das jeweilige Trägersignal 40 ist, wird hingegen ein zweiter Wert 62 herangezogen. Somit erfolgt jedes Mal, wenn das Nutzsignal 56 das zugeordnete Trägersignal 40 schneidet, ein Wechsel des Werts des jeweiligen pulsweitenmodulierten Signals 58. Da sich die beiden Nutzsignale 56 entsprechen, jedoch die Trägersignale 40 zueinander um den Phasenversatz 50 verschoben sind, erfolgt der Wechsel zwischen den beiden Werten 60, 62 bei den beiden pulsweitenmodulierten Signalen 58 zueinander zeitlich verschoben oder jeweils entgegengesetzt gerichtet.

Sobald die pulsweitenmodulierten Signale 58 erstellt wurden, wird mittels des jeweiligen Umrichters 14 eine entsprechende elektrische Spannung an den jeweiligen Aktor 12 angelegt. Hierfür werden die Halbleiterschalter der jeweiligen Brückenschaltung entsprechend betätigt. Somit entspricht die Form der an die Aktoren 12 angelegten elektrischen Spannung der Form des jeweiligen pulsweitenmodulierten Signal 58, wobei jedoch der erste Wert 60 dem Wert von 0 V und der zweiter Wert 62 der an dem Gleichspannungskreis 16 anliegenden elektrischen Gleichspannung entspricht.

Aufgrund der angelegten elektrischen Spannung erfolgt ein Stromfluss durch den jeweiligen Aktor 12. Bei einer Änderung der angelegten elektrischen Spannung treten aufgrund von bestehenden Kapazitäten Umladeströme bei jedem der Aktoren 12 auf. Wegen des Phasenversatzes 50 sind jedoch bei den beiden Umrichtern 14 die Zeitpunkte, an denen die angelegte elektrische Spannung geändert wird, zueinander versetzt bzw. das Umschalten erfolgt in die genau entgegengesetzte Richtung. Daher heben sich die Umladeströme in dem Gleichspannungskreis 16 teilweise oder vollständig auf. Somit ist eine Belastung des Gleichrichters 18 und eine Rückwirkung in das Versorgungsnetz 20 verringert.

Bei der Regelung der Anlage 2 werden die beiden Nutzsignale 56 gleichzeitig geändert, sofern dies aufgrund der aktuellen Leistungsanforderung gewünscht oder erforderlich ist. Die Änderung erfolgt hierbei stets zu Beginn eines der Takte eines der Trägersignale 40 und somit in der Mitte eines der Takte des verbleibenden Trägersignals 40. Infolgedessen wird bei den sich deswegen ändernden pulsweitenmodulierten Signalen 58 keiner der Aktoren 12 kurzzeitig mit einer übermäßigen erhöhten oder verringert Leistung betrieben. Mit anderen Worten ist, da die beiden Trägersignale 40 zueinander invertiert sind, ein Ausbilden von Artefakten verringert, wobei ein abgestimmter Betrieb der beiden Aktoren 12 zueinander ermöglicht ist.

Zusammenfassend wird somit bei dem Verfahren 52 in Abhängigkeit des jeweiligen Nutzsignals 56 für den jeweiligen Aktor 12 anhand des jeweiligen periodischen Trägersignals 40 das jeweilige pulsweitenmoduliertes Signal 58 erstellt. Dabei wird für die beiden Aktoren 12 das gleiche Nutzsignal 56 verwendet, die sich somit nicht unterscheiden. Die beiden Trägersignale 40. sind Dreieckswelle und gleich, jedoch um den vorbestimmten Phasenversatz 50 zueinander versetzt, der gleich der Hälfte der Periode gewählt ist. Jeder Umrichter 14 wird zum Anlegen der zu dem jeweiligen pulsweitenmodulierten Signal 58 korrespondierenden elektrischen Spannung an den jeweiligen Aktor 12 betrieben.

### Bezugszeichenliste

- 2: Anlage
- 4: feststehender Stempel
- 6: beweglicher Stempel
- 8: Führung
- 10: Elektromotor
- 12: Aktor
- 14: Umrichter
- 16: Gleichspannungskreis
- 18: Gleichrichter
- 20: Versorgungsnetz
- 22: Steuergerät
- 24: Feldbus
- 26: Teilmotor
- 28: Stator
- 30: Phase
- 32: Rotor
- 33: Rotationsachse
- 34: Verfahren zur Inbetriebnahme
- 36: erster Arbeitsschritt
- 38: gemeinsamer Zeitpunkt
- 40: Trägersignale
- 42: zweiter Arbeitsschritt
- 44: weiterer Zeitpunkt
- 46: Periode
- 48: dritter Arbeitsschritt
- 50: Phasenversatz
- 52: Verfahren zum Betrieb
- 54: vierter Arbeitsschritt
- 56: Nutzsignal
- 58: pulsweitenmoduliertes Signal
- 60: erster Wert
- 62: zweiter Wert

## Patentansprüche

1. Verfahren (34) zur Inbetriebnahme einer Anlage (2), die zwei Aktoren (12) aufweist, die mittels jeweils eines Umrichters (14) mit einem gemeinsamen Gleichspannungskreis (16) elektrisch kontaktiert sind, und die gemäß einem Verfahren (52) betrieben werden soll, bei dem in Abhängigkeit eines jeweiligen Nutzsignals (56) für den jeweiligen Aktor (12) anhand eines jeweiligen periodischen Trägersignals (40) ein pulsweitenmoduliertes Signal (58) erstellt und der jeweilige Umrichter (14) zum Anlegen einer entsprechenden elektrischen Spannung an den jeweiligen Aktor (12) betrieben wird, und beidem die beiden Trägersignale (40) gleich, jedoch um einen vorbestimmten Phasenversatz (50) zueinander versetzt gewählt werden, **dadurch gekennzeichnet, dass**
- die beiden Trägersignale (40) zu einem gemeinsamen Zeitpunkt (38) ohne Phasenversatz gestartet werden, und
- in Abhängigkeit einer Adresse des jeweiligen Umrichters (14) die Frequenz des zugeordneten Trägersignals (40) für eine Periode (46) verändert und nachfolgend erneut auf den ursprünglichen Wert gesetzt wird, sodass sich zwischen den Trägersignalen (40) der vorbestimmte Phasenversatz (50) ergibt.

2. Anlage (2), die zwei mittels eines jeweiligen Umrichters (14) mit einem gemeinsamen Gleichspannungskreis (16) elektrisch kontaktierte Aktoren (12) aufweist, und die gemäß einem Verfahren (34) nach Anspruch 1 in Betrieb genommen ist.

3. Anlage (2) nach Anspruch 2,
**dadurch gekennzeichnet,**
**dass** die Umrichter (14) dreiphasig sind.

4. Anlage (2) nach Anspruch 2 oder 3,
**dadurch gekennzeichnet,**
**dass** die beiden Aktoren (12) jeweils Teilmotoren (26) eines gemeinsamen Elektromotors (10) sind.

## Claims

1. Method (34) for commissioning an installation (2), which has two actuators (12) that are electrically contact-connected to a common DC voltage circuit (16) by means of a respective converter (14), and which is intended to be in accordance with a method (52) in which a pulse-width-modulated signal (58) is created on the basis of a respective periodic carrier signal (40) depending on a respective useful signal (56) for the respective actuator (12), and the respective converter (14) is operated so as to apply a corresponding voltage to the respective actuator (12), and in which the two carrier signals (40) are chosen to be identical, but to be offset by a predetermined phase offset (50) in relation to one another, **characterized in that**
- the two carrier signals (40) are started at a shared time (38) without a phase offset, and
- depending on an address of the respective converter (14), the frequency of the associated carrier signal (40) is changed for a period (46) and is then set to the original value again so as to produce the predetermined phase offset (50) between the carrier signals (40).

2. Installation (2), which has two actuators (12) electrically contact-connected to a common DC voltage circuit (16) by means of a respective converter (14), and which is put into operation in accordance with a method (34) according to Claim 1.

3. Installation (2) according to Claim 2,
**characterized**
**in that** the converters (14) are three-phase.

4. Installation (2) according to Claim 2 or 3,
**characterized**
**in that** the two actuators (12) are each motor elements (26) of a common electric motor (10).

## Revendications

1. Procédé (34) de mise en service d'une installation (2) qui présente deux actionneurs (12) qui sont mis en contact électrique avec un circuit de tension continu (16) commun au moyen d'un convertisseur (14) respectivement, et qui doit être selon un procédé (52) dans lequel un signal (58) modulé en largeur d'impulsion est créé en fonction d'un signal utile (56) respectif pour l'actionneur (12) respectif à l'aide d'un signal porteur périodique (40) respectif, et le convertisseur (14) respectif fonctionne pour appliquer une tension électrique correspondante à l'actionneur (12) respectif, et dans lequel les deux signaux porteurs (40) sont sélectionnés pour être identiques mais en étant décalés l'un par rapport à l'autre d'un décalage de phase (50) prédéterminé,
**caractérisé en ce que**
- les deux signaux porteurs (40) sont lancés en même temps (38) sans décalage de phase, et
- en fonction d'une adresse du convertisseur (14) respectif, la fréquence du signal porteur (40) associé est modifiée pour une période (46) et est ensuite remis sur la valeur initiale de sorte qu'il en résulte le décalage de phase (50) prédéterminé entre les signaux porteurs (40).

2. Installation (2) qui présente deux actionneurs (12) mis en contact électrique au moyen d'un convertisseur (14) respectif avec un circuit de tension continue (16) commun, et qui est mise en service selon un procédé (34) selon la revendication 1.

3. Installation (2) selon la revendication 2, **caractérisée en ce que** le convertisseur (14) est triphasé.

4. Installation (2) selon la revendication 2 ou 3, **caractérisée en ce que** les deux actionneurs (12) sont respectivement des moteurs partiels (26) d'un moteur électrique (10) commun.
